# EUROPÄISCHE PATENTANMELDUNG

(11) **EP 1 191 728 A2**
(43) Veröffentlichungstag der Anmeldung: **27.03.2002**
(21) Anmeldenummer: 01120263.7
(22) Anmeldetag: 23.08.2001
(51) Int. Cl.: H04J 14/02, H04B 10/08

(54) **Verfahren zum Ausgleich von Kanalqualitätsunterschieden in einem WDM-System**

(30) Priorität: 25.09.2000 DE 10047342
(71) Anmelder: SIEMENS AKTIENGESELLSCHAFT, 80333 München (DE)
(72) Erfinder: Krummrich, Peter, Dr., 81379 München (DE); Mayer, Albrecht, 81371 München (DE); Neuhauser, Richard, Dr., 81477 München (DE)

(57) **Zusammenfassung**

Die Erfindung befasst sich mit einem Verfahren zum Ausgleich von Kanalqualitätsunterschieden in einem WDM-System (13) mit N Sendern (1), N Empfängern (3) und N Kanälen (2).
Erfindungsgemäß werden folgende Schritte durchgeführt:
Separates Messen jeweils einer Bitfehlerrate jedes einzelnen der N Kanäle (2) in jedem der N Empfänger (3), wobei diese jeweils bei verschiedenen vom optimalen Wert abweichenden Entscheiderschwellen in N ersten Entscheidern (11) gemessen werden;
Ermitteln der Bitfehlerrate am optimalen Arbeitspunkt durch Extrapolation der gemessenen Bitfehlerraten für jeden einzelnen der N Kanäle (2);
Bestimmen eines Q-Wertes für jeden der N Kanäle (2) aus den jeweiligen zugehörigen extrapolierten Bitfehlerraten; Abgleichen der N Sender (1) über eine Regeleinrichtung (12), indem die Pegel der Kanäle (2) mit hoher Bitfehlerrate angehoben und die Pegel der Kanäle (2) mit geringer Bitfehlerrate abgesenkt werden im Verhältnis des jeweiligen Q-Wertes des Kanals (2), wobei der Summenpegel aller N Kanäle (2) in den N Sendern (1) konstant gehalten wird, und Wiederholen der genannten Schritte, bis alle N Q-Werte der N Kanäle (2) in den N Empfängern (3) gleich sind.

## Beschreibung

Die Erfindung befaßt sich mit einem Verfahren zum Ausgleich von Kanalqualitätsunterschieden in einem WDM-System mit N Sendern, N Empfängern und N Kanälen.

Die Übertragungskapazität optischer Übertragungssysteme läßt sich durch das Multiplexen von Wellenlängen unter Beibehaltung der vorhandenen Glasfaser-Infrastruktur steigern. Probleme bei der Übertragung in solchen WDM-Systemen bereitet die Wellenlängenabhängigkeit einiger optischer Komponenten sowie einiger Effekte. Regelmäßig führt dies dazu, dass die benutzten Kanäle am Ende der Strecke unterschiedliche Pegel, optische Signal-Rauschabstände (OSNR) und Verzerrungen aufweisen. Die maximal überbrückbare Streckenlänge wird dabei von dem Kanal vorgegeben, der die schlechteste Signalqualität bzw. höchste Bitfehlerrate aufweist. Deutlich bessere Bitfehlerraten anderer Kanäle helfen in diesem Zusammenhang nicht weiter, sondern deuten eher auf eine schlechte Ausnutzung der Systemresourcen hin. Ziel der Steckenauslegung bzw. Optimierung derselben sollte es deshalb sein, für alle Kanäle am Ende der Strecke die gleiche Bitfehlerrate zu erreichen. Die Bitfehlerrate eines Kanals hängt dabei von einer Reihe von Parametern ab. Zunächst muss der Pegel des Kanals am Ende der Strecke in den Dynamikbereich des Empfängers fallen. Des weiteren hat die OSNR-Verteilung am Streckenende, in den Empfängern, einen Einfluß auf die Bitfehlerrate. Die OSNR-Verteilung wird durch die Kanalpegelverteilungen an den Eingängen der optischen Verstärker auf den einzelnen Streckenabschnitten des Übertragungsweges und deren Rauschzahlspektren sowie durch Mehrfach-Reflexionen bzw. Mehrwegeausbreitung bestimmt. Des weiteren haben Signalverzerrungen einen Einfluss auf die Bitfehlerrate. Die Signalverzerrungen werden in den Sendern oder Empfängern durch die Phasengänge optischer Komponenten, beispielsweise dem Frequenzgang in Filtern und der Dispersion der Übertragungsfasern, oder durch nichtlineare Verzerrungen in der Übertragungsfaser, beispielsweise Vierwellenmischung, Kreuzphasenmodulation oder Selbstphasenmodulation, erzeugt.

Bisher wurde dieses Problem dadurch gelöst, dass am Anfang der Strecke, in den Sendern, mit Hilfe variabler Dämpfungsglieder für alle Kanäle gleiche Signalpegel eingestellt wurden. Durch die Wellenlängenabhängigkeit der Komponenten wachsen die Kanalpegeldifferenzen entlang der Strecke nahezu stetig an. Die starke Streuung am Ende der Strecke lässt sich durch ausreichende Systemreserven und den Dynamikbereich der Empfänger tolerieren. Eine bessere Ausnutzung der Systemresourcen bietet jedoch eine Preemphase der Kanalpegel am Streckenanfang. Dabei wird die Pegelverteilung am Streckenanfang so gewählt, dass die Kanäle am Streckenende alle den gleichen OSNR aufweisen. Wenn das System rauschbegrenzt arbeitet und Signalverzerrungen keine Rolle spielen, ergibt sich am Streckenende ein günstiger Betriebszustand. Es hat sich jedoch gezeigt, dass Signalverzerrungen eine immer stärkere Rolle spielen. Gleiche OSNR-Werte an den Empfängern garantieren daher keine Übereinstimmung der Bitfehlerrate aller Kanäle. In gewissem Umfang lassen sich zwar Signalverzerrungen und OSNR gegeneinander aufwiegen, so dass ein Kanal, der am Ende der Strecke etwas stärkere Signalverzerrungen aufweist als die anderen, sich durch einen besseren OSNR auf gleiche Bitfehlerrate bringen lässt. Jedoch ist bei WDM-Systemen mit sehr kleinen Kanalabständen keine zuverlässige Bestimmung des OSNR möglich, so daß die OSNR-Preemphase nicht durchgeführt werden kann.

Aufgabe der Erfindung ist es deshalb, ein Verfahren zur Verfügung zu stellen, mit dem zuverlässig auch bei WDM-Systemen mit kleinen Kanalabständen ein Ausgleich von Kanalqualitätsunterschieden erzielt werden kann.

Diese Aufgabe wird durch ein Verfahren mit den Merkmalen des Anspruchs 1 gelöst. Vorteilhafte Weiterbildungen der Erfindung sind Gegenstand der Unteransprüche.

Ein erfindungsgemäßes Verfahren arbeitet mit der Bestimmung von Q-Werten, die zur Bewertung der Signalqualität und dem Anheben bzw. Absenken einzelner Kanalpegel am Streckenanfang bei konstantem Summenpegel zum Ausgleich der Qualitätsunterschiede dienen. Die Bestimmung eines Q-Wertes erfolgt dadurch, dass eine Bitfehlerrate eines jeden einzelnen Kanals in den einzelnen Empfängern bei verschiedenen, vom optimalen Wert abweichenden Entscheiderschwellen und Phasenlagen gemessen werden. Die gemessenen Bitfehlerraten werden für jeden einzelnen der Kanäle am optimalen Arbeitspunkt extrapoliert und somit die Bitfehlerrate ermittelt. Aus dieser Bitfehlerrate wird dann ein Q-Wert für jeden der Kanäle bestimmt. Dieser Q-Wert ist ein Maß für die Signalqualität. Gegenüber der Bestimmung der Bitfehlerrate, d.h. dem direkten Abzählen von Fehlern innerhalb eines bestimmten Zeitraumes, wird dadurch jedoch vermieden, dass eine Bestimmung der Bitfehlerraten bei kleinen Fehlerraten zu immens großen Messdauern führen würde, was nicht praktikabel ist. Die Messung der Q-Werte kann dagegen in verhältnismäßig kurzer Zeit durchgeführt werden. Der Q-Wert berücksichtigt jedoch nicht nur den OSNR des Kanals, sondern auch die Signalverzerrungen und erlaubt damit eine deutlich bessere Abschätzung der Bitfehlerrate. Bei der Messung des Q-Wertes durch Verschieben der Entscheiderschwelle und Phasenlage des Empfängers werden nicht nur Verzerrungen im Sender und entlang der Strecke, sondern auch im Empfänger mit erfasst. Für einen Kanal, für den ein kleiner Q-Wert bestimmt wurde, wird über eine Regeleinrichtung im Sender der Pegel angehoben. Durch das Anheben des Pegels am Streckenanfang steigt üblicherweise der OSNR-Wert des Kanals am Streckenende und damit auch der Q-Wert. Für einen Kanal, für den ein großer Q-Wert bestimmt wurde, findet dagegen eine Absenkung des Pegels im Sender statt. Das Anheben bzw. Absenken in den Sendern geschieht dabei im Verhältnis der einzelnen ermittelten Q-Werte, wobei der Summenpegel der Kanäle konstant gehalten wird. Dies wird so lange wiederholt, bis sich in den Empfängern für alle Kanäle gleiche Q-Werte einstellen. Dann ist der gewünschte Idealzustand erreicht, dass alle Kanäle gleiche Qualität aufweisen. Die überbrückbare Streckenlänge ist dann maximal.

Vorteilhaft ist es, wenn vorab eine Preemphase erfolgt, bei der die Pegelverteilung in den N Sendern so verändert wird, dass die OSNR-Werte der N Kanäle in den N Empfängern angeglichen werden, indem die Pegelverteilung in den N Empfängern gemessen wird und über die Regeleinrichtung die Pegelverteilung in den N Sendern gesteuert wird. Da die Messung der Q-Werte zwar zu einem deutlich besseren Ergebnis führt als das bekannte Verfahren über die Ermittlung der OSNR-Werte der Kanäle am Streckenende, ist es vorteilhaft, eine solche Ermittlung dem erfindungsgemäßen Verfahren voranzustellen. Der damit gefundene Betriebszustand des WDM-Systems dient als Ausgangszustand für einen weiteren Abgleich auf gleiche Q-Werte. Da die Pegelverteilung für gleiche Q-Werte und OSNR-Werte bei in der Praxis noch tolerierbaren Signalverzerrungen nicht allzu weit voneinander entfernt liegen, erlaubt dieses zweistufige Vorgehen ein deutlich schnelleres Einpegeln des WDM-Systems.

Weiterhin ist es vorteilhaft, wenn die Messung der N Q-Werte der N Kanäle jeweils in einem zweiten, dem jeweiligen Empfänger zugeordneten Entscheider während des Betriebs des WDM-Systems erfolgt. Dadurch werden einerseits Verzerrungen berücksichtigt, die im Empfänger vor dem Entscheider auftreten, und andererseits erlaubt ein solches Verfahren, einen ständigen Neuabgleich der Preemphase, während dessen das WDM-System in Betrieb ist, durchzuführen.

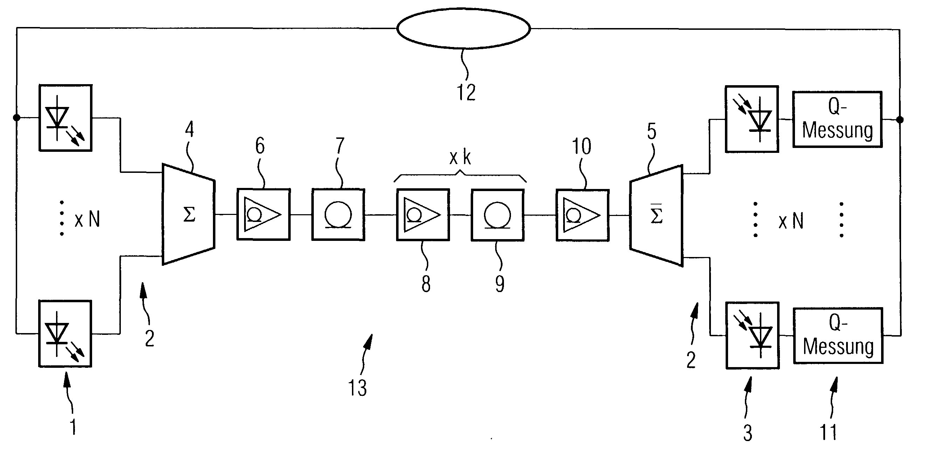

Vorteilhafte Ausgestaltungen der Erfindung werden weiter in der Zeichnung erläutert. Die einzige Figur zeigt:

Ein Blockschaltbild einer Vorrichtung zum Ausführen eines erfindungsgemäßen Verfahrens.

Es ist ein WDM-System 13 dargestellt, das N Sender 1 in Form von Lasern unterschiedlicher Wellenlänge aufweist. Die einzelnen von den Sendern 1 gespeisten Kanäle 2 werden in einem Multiplexer 4 zu einem einzigen optischen Signal zusammengefasst. Dieses wird über einen Booster 6, einen ersten Streckenabschnitt 7 sowie einen weiteren Streckenabschnitt, der sich aus k Zwischenverstärkern 8 und daran anschließenden Streckenabschnitten 9 zusammensetzt, sowie einem Preamplifier 10 gebildet. Das optische Signal wird von einem Demultiplexer 5 in seine einzelnen Kanäle 2 zerlegt und an N Empfänger 3 weitergeleitet.

In einem ersten Schritt werden als Startwerte am Anfang der Strecke für alle Kanäle 2 gleiche Signalpegel eingestellt. Eine Optimierung der so eingestellten Eingangspegel wird über eine OSNR-Preemphase der Kanalpegel am Streckenanfang vorgenommen. Dabei wird die Pegelverteilung am Streckenanfang so geregelt, daß die Kanäle 2 am Streckenende alle den gleichen OSNR aufweisen. Daran schließt sich eine Bestimmung der Signalqualität der einzelnen Kanäle 2 am Streckenende an.

An jeden der einzelnen Empfänger 3 schließt sich ein erster Entscheider 11 an. In den ersten Entscheidern 11 wird für jeden Kanal 2 eine Bestimmung eines Q-Wertes vorgenommen. Dies geschieht dadurch, daß eine Bitfehlerrate bei verschiedenen, vom optimalen Wert abweichenden Entscheiderschwellen und Phasenlagen gemessen wird. Da hierbei hohe Bitfehlerraten auftreten, kann dies innerhalb einer kurzen Messzeit geschehen. Gegenüber einer herkömmlichen Bestimmung der Bitfehlerrate, d.h. durch das direkte Abzählen von Fehlern innerhalb eines bestimmten Zeitraums, ergibt sich insbesondere bei kleinen Fehlerraten eine immense Zeitersparnis. Anschließend wird die Bitfehlerrate am optimalen Arbeitspunkt durch Extrapolation der gemessenen Werte für jeden einzelnen Kanal 2 ermittelt. Daraus wird für jeden Kanal 2 der zugehörige Q-Wert bestimmt.

Mittels einer Regeleinrichtung 12, die sämtliche Q-Werte erhält, werden die Pegel der einzelnen Kanäle 2 am Streckenanfang bei konstantem Summenpegel angehoben bzw. abgesenkt. Bei einem kleinen Q-Wert erfolgt eine Anhebung des Pegels des dazugehörigen Kanals 2. Dagegen erfolgt bei einem hohen Q-Wert eine Absenkung des Pegels des dazugehörigen Kanals 2 am Streckenanfang. Durch das Anheben des Pegels am Streckenanfang steigt üblicherweise der OSNR-Wert des Kanals 2 am Streckenende.

Der Q-Wert berücksichtigt jedoch nicht nur den OSNR des jeweiligen Kanals 2, sondern auch die Signalverzerrungen und erlaubt damit eine wesentlich bessere Abschätzung der Bitfehlerrate. Bei der Messung des Q-Wertes durch Verschieben der Entscheiderschwelle des Emfpängers 3 werden nicht nur Verzerrungen im Sender 1 bzw. entlang der Strecke, sondern auch Verzerrungen im Empfänger 3 erfaßt. Nach erfolgreicher Regelung mittels der ersten Entscheider 11 und der Regeleinrichtung 12 sind die Bitfehlerraten am Ende der Strecke gleich. Dadurch ergibt sich für das WDM-System 13 eine hervorragende Ausnutzung der Systemresourcen und damit eine überbrückbare Streckenlänge, die maximal ist.

Bezugszeichenliste
- 1: Sender
- 2: Kanal
- 3: Empfänger
- 4: Multiplexer
- 5: Demultiplexer
- 6: Booster
- 7: erster Streckenabschnitt
- 8: Zwischenverstärker
- 9: weiterer Streckenabschnitt
- 10: Preamplifier
- 11: erster Entscheider
- 12: Regeleinrichtung
- 13: WDM-System

## Patentansprüche

1. Verfahren zum Ausgleich von Kanalqualitätsunterschieden in einem WDM-System (13) mit N Sendern (1), N Empfängern (3) und N Kanälen (2) mit folgenden Schritten:
Separates Messen jeweils einer Bitfehlerrate jedes einzelnen der N Kanäle (2) in jedem der N Empfänger (3), wobei diese jeweils bei verschiedenen vom optimalen Wert abweichenden Entscheiderschwellen und Phasenlagen in N ersten Entscheidern (11) gemessen werden;
Ermitteln der Bitfehlerrate am optimalen Arbeitspunkt durch Extrapolation der gemessenen Bitfehlerraten für jeden einzelnen der N Kanäle (2);
Bestimmen eines Q-Wertes für jeden der N Kanäle (2) aus den jeweiligen zugehörigen extrapolierten Bitfehlerraten; Abgleichen der N Sender (1) über eine Regeleinrichtung (12), indem die Pegel der Kanäle (2) mit kleinem Q-Wert angehoben und die Pegel der Kanäle (2) mit großem Q-Wert abgesenkt werden im Verhältnis des jeweiligen Q-Wertes des Kanals (2), wobei der Summenpegel aller N Kanäle (2) in den N Sendern (1) konstant gehalten wird, und
Wiederholen der genannten Schritte, bis alle N Q-Werte der N Kanäle (2) in den N Empfängern (3) gleich sind.

2. Verfahren nach Anspruch 1,
**dadurch gekennzeichnet, dass**
vorab eine Preemphase erfolgt, bei der die Pegelverteilung in den N Sendern (1) so verändert wird, dass die OSNR-Werte der N Kanäle (2) in den N Empfängern (3) angeglichen werden, indem die OSNR-Werte in den N Empfängern (3) gemessen werden und über die Regelung (12) die Pegelverteilung in den N Sendern (1) gesteuert wird.

3. Verfahren nach einem dder vorstehenden Ansprüche,
**dadurch gekennzeichnet, dass**
das Einpegeln des WDM-Systems (13) auf gleiche Q-Werte mittels einer externen Messtechnik während der Installation erfolgt.

4. Verfahren nach einem der Ansprüche 1 oder 2,
**dadurch gekennzeichnet, dass**
die Messung der N Q-Werte der N Kanäle (2) jeweils in einem zweiten, dem jeweiligen Empfänger (3) zugeordneten Entscheider während des Betriebs des WDM-Systems (13) erfolgt.
